(19) **Europäisches Patentamt / European Patent Office / Office européen des brevets**

(11) **EP 3 747 760 B1**

(12) # EUROPEAN PATENT SPECIFICATION

(45) Date of publication and mention
of the grant of the patent:
**19.05.2021 Bulletin 2021/20**

(51) Int Cl.:
**B64C 1/14** *(2006.01)*        **E05F 5/00** *(2017.01)*
**B60J 5/06** *(2006.01)*

(21) Application number: **19400013.9**

(22) Date of filing: **06.06.2019**

(54) **A VEHICLE, IN PARTICULAR AN AIRCRAFT, WITH A SLIDING ELEMENT ARRANGEMENT**

FAHRZEUG, INSBESONDERE EIN FLUGZEUG, MIT EINER GLEITELEMENTANORDNUNG

VÉHICULE, EN PARTICULIER UN AÉRONEF, AYANT UN AGENCEMENT D'ÉLÉMENTS COULISSANTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.12.2020 Bulletin 2020/50**

(73) Proprietors:
• **AIRBUS HELICOPTERS DEUTSCHLAND GmbH
86609 Donauwörth (DE)**
• **Airbus Helicopters
13725 Marignane Cedex (FR)**

(72) Inventors:
• **Vayssiere, Aurélien
D-86694 Niederschönenfeld GT Feldheim (DE)**

• **Semoli, Glauco
IT-20851 Lissone (MB) (IT)**
• **Fruitet, Pierre
F-30170 Pompignan (FR)**

(74) Representative: **GPI Brevets
1330, rue Guillibert de la Lauzière
EuroParc de Pichaury
Bât B2
13856 Aix en Provence Cedex 3 (FR)**

(56) References cited:
**DE-A1-102005 019 150        DE-A1-102007 028 967
GB-A- 2 116 252               JP-A- 2000 008 695
US-A1- 2016 325 816           US-A1- 2019 119 966**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention is related to a vehicle with a primary vehicle structure that is provided with an aperture, comprising a sliding element arrangement with a sliding element that is adapted for closing the aperture of the primary vehicle structure in a closing position and for sliding along at least a portion of the primary vehicle structure during an opening movement of the sliding element into an opening position, in which the aperture of the primary vehicle structure is at least partly open, wherein an opening speed controlling apparatus is provided for controlling an opening speed of the sliding element during the opening movement. The present invention is further related to an opening speed controlling apparatus for controlling an opening speed of a sliding element of an associated vehicle during an opening movement of the sliding element.

Sliding elements of a vehicle, such as sliding doors or sliding windows, which are used to open or close associated apertures provided in the vehicle, are usually guided on the vehicle via suitable guide rails for sliding along at least a portion of the vehicle during an opening movement of the sliding elements into an associated opening position, or during a closing movement of the sliding elements into an associated closing position. In general, such sliding elements must be moved manually from their associated closing position in the aperture of the vehicle along the guide rails towards their associated opening position, and vice versa.

In particular in aircrafts, e. g. in helicopters, specific operation scenarios may require performance of an opening movement of a given sliding element during flight independent of a current flight speed. However, the given sliding element, such as a sliding door or sliding window, is subject to very high aerodynamic forces if the opening movement is performed during flight, which can lead to a loss of the sliding element during flight. Nevertheless, it is clear that for safety reasons and according to applicable regulations, such as the EASA regulations, it is imperatively necessary to keep the sliding element on the helicopter under all circumstances. In fact, it is not only forbidden, but also highly critical and dangerous to lose, for instance, the sliding element during flight, e. g. above a city or other plants, as a sliding element that is lost during flight may e. g. collide with and, thus, potentially destroy an engine, a wing or a counter-torque device of the helicopter, thus, endangering crew and passengers of the helicopter. This is not acceptable with today's EASA regulations.

More specifically, when performing a respective opening movement of a given sliding door of a helicopter during flight, the sliding door is directly exposed to the air flow which generates an aerodynamic force acting on it. The component of the aerodynamic force that is oriented in parallel to a direction of the opening movement, i. e. the opening direction of the sliding door, pushes the sliding door along an associated guide rail, thereby increasing a respective door opening speed. More specifically, the component D of the aerodynamic force acting on the sliding door increases with the square of the flight speed $f_s$ of the helicopter $(D = 0.5\rho c A f_s^2)$.

Since the component of the aerodynamic force acting on the sliding door, thus, rapidly increases with the flight speed of the helicopter, the door opening speed likewise increases rapidly during the opening movement during flight. However, other factors may also affect the door opening speed of the sliding door, such as the energy used by an operator to open the sliding door and underlying flight conditions of the helicopter, in particular pitch, sideslips and roll angles of the helicopter.

As a consequence, sliding doors in helicopters may generally only be opened during flight for flight speed values up to 60 knots, while opening of the sliding doors for flight speed values above 60 knots is potentially dangerous and should, therefore, be avoided. This is mainly due to the fact that a respective opening movement of the sliding door is usually only stopped by means of a small damping system installed at the end of the associated guide rail, which acts as an end stopper for the sliding door.

More specifically, such a conventional small damping system is generally used to slow down the sliding door as it approaches an associated end of its guide rail, hence to reduce severity of a respective stopping strike. In other words, the conventional small damping system is suitable to slow down the sliding door while absorbing its kinetic energy. However, such a conventional small damping device is not designed to control the velocity of the sliding door along the whole length of its travel along the guide rail, as it only engages the sliding door at the end of travel, i. e. at the end of its guide rail. As such, a braking action of the conventional small damping system is performed in a very short distance which makes this solution not effective in cases where the sliding door is travelling at high speed along its guide rail. More particularly, when the sliding door is operated at high flight speed, the aerodynamic force will accelerate it to a speed value above the usual ones, hence a rapid braking action from the conventional small damping system would generate a drastic deceleration, which is very hard to manage.

More generally, the conventional small damping system is not suitable to completely absorb the kinetic energy of the sliding door such that a full stop of the sliding door is achieved if the latter has a very high door opening speed caused by flight speed values above 60 knots. In fact, with increasing flight speed the sliding door is subjected to a higher aerodynamic push which increases the door opening speed as described above with the square of the flight speed of the helicopter and, consequently, the kinetic energy that has to be absorbed by the conventional small damping system. For flight speed values above 60 knots, the conventional small damping system would not be able to effectively dissipate this kinetic energy, such that the conventional small damping system and the respective sliding door arrangement in general may potentially fail. As a result, an oversized damping system would need to be designed in order to absorb the large kinetic energy of the sliding door travelling at high speed, which would, however, lead to a bulky arrangement with increased weight and complexity.

Various tests have been performed for verification purposes. In these tests, sliding doors of helicopters have been opened during flight at flight speed values of up to 80 knots. Obtained results of these tests are suitable to confirm that a high amount of kinetic energy is respectively transferred to the conventional small damping system located at the end of the sliding door's guide rail. Furthermore, it was observed that the conventional small damping system respectively caused a quick braking action that induced an undesired rotational moment on the sliding door caused by the fact that the sliding door is completely stopped, thus, acting on associated rollers arranged at its lower part, i. e. comparatively far away from the sliding door's center of gravity. However, most importantly a dangerous condition for the sliding door's operator was identified. In fact, immediately after unlatching of the sliding door, the latter quickly gains opening speed leaving the operator with only little time for releasing the sliding door's handle before, eventually, being pulled by the sliding door. All these effects become, of course, more critical as the flight speed of the helicopter increases.

By means of further testing, a maximum practicable door opening speed (hereinafter referred to as $v_{MAX}$) can be determined for the sliding door of each type of helicopter dependent on an underlying configuration of the helicopter. More particularly, a respectively determined maximum practicable door opening speed $v_{MAX}$ indicates for a given sliding door of an associated helicopter type a maximum door opening speed up to which the given sliding door will safely and reliably open and reach its final position. A preferred desired value for the door opening speed (hereinafter referred to as $v_D$) is slightly lower, i. e. $v_D < v_{MAX}$. Consequently, there is a need to implement a solution that allows to control the door opening speed adequately such that the sliding door may be opened safely and reliably during flight, even at higher flight speed values, such as flight speed values above 60 knots, in particular as current helicopter operators expressed the desire to be able to open sliding doors of helicopters at any flight speed values during flight.

As a result, it can be concluded that a controlled deceleration of the sliding door during its travel along the whole guide rail is most suitable for enabling opening of the sliding door at various different flight speed values during flight. Such a deceleration may be achieved by controlling the sliding door using electromechanical systems such as motorized opening and closure of the sliding door, which are usually referred to as power door systems. The implementation of electrical motors on the sliding door provides a suitable control solution, but also leads to increased weight and complexity of a given sliding door arrangement and the airframe. Alternatives able to control the opening speed of the sliding door during its travel along the total length of the guide rail are currently not available in the helicopter market.

The document JP 2009-250024 A describes an automatic sliding door having forced push-in means. This sliding door is automatically closed gradually after having been fully opened. An initial closing speed is accelerated up to a specified speed value starting from zero and, afterwards, the sliding door is closed gradually at a set speed and also gradually closed by deceleration. The control device of this automatic sliding door is, however, not suitable for use with a sliding door of a helicopter in the above-described scenarios.

The document JP 2004-009897 A describes a door opening/closing assist device which is used in combination with a rotatable side door of a car and used to assist opening and closing of the rotatable side door. The door opening/closing assist device has an apparatus main body that is attached to a back side of a front seat back of the car and provided with a winding unit and an assist belt wound around the winding unit so as to be able to be delivered and stored. A free tip of the assist belt is connected to an appropriate position inside the rotatable side door and stretched between the apparatus main body that is attached to the back side of the front seat back and the rotatable side door. The winding unit has a shaft portion that is rotatably mounted to the apparatus main body and includes a braking unit that adjustably brakes rotation of the shaft portion. The braking unit is formed by a knob which can be screwed onto the winding unit to exert a pressing force on the shaft portion such that a respective door opening speed can be controlled by braking the rotation of the shaft portion when the rotatable side door is opened.

However, this door opening/closing assist device is not suitable for use with sliding doors in the above-described scenarios. In particular, this door opening/closing assist device is not suitable for use with sliding doors of helicopters, which should be opened during flight at flight speed values of more than 60 knots.

The document US 2019/0119966 A1 describes a vehicle having a shell, the shell being provided with an opening in register with a cabin of the vehicle, the vehicle having a door slidably mounted on the shell to slide between a closed position and an open position, the door shutting the opening when in the closed position. The vehicle further includes at least one assistance device, the assistance device comprising two elements, the two elements comprising respectively a winder carrying a strap and a receptacle, the winder including a brake braking unwinding of the strap from the winder, one of the elements being fastened to the shell and one of the elements being fastened to the door, the strap extending to a free end carrying a latchplate, the receptacle comprising an attachment member for reversibly attaching the latchplate to the receptacle, the winder braking movement of the door during opening of the door and storing energy when the latchplate is attached to the receptacle, the winder assisting an operator to close the door by restoring the energy while closing the door when the latchplate is attached to the receptacle.

It is, therefore, an object of the present invention to provide a new helicopter with a sliding door and, more generally, a new vehicle with a sliding element arrangement having a sliding element, which may be securely and reliably opened during various different operating conditions. This object is solved by a vehicle having the features of claim 1.

More specifically, according to the present invention a vehicle with a primary vehicle structure that is provided with an aperture comprises a sliding element arrangement with a sliding element that is adapted for closing the aperture of the primary vehicle structure in a closing position and for sliding along at least a portion of the primary vehicle structure during an opening movement of the sliding element into an opening position, in which the aperture of the primary vehicle structure is at least partly open. An opening speed controlling apparatus is provided for controlling an opening speed of the sliding element during the opening movement. The opening speed controlling apparatus comprises a control device with a rotatable winding shaft that rotates during the opening movement; and a belt-type mechanical link that mechanically couples the sliding element to the primary vehicle structure and that is at least partly wound onto the rotatable winding shaft in the closing position of the sliding element. The belt-type mechanical link is at least partially unwound from the rotatable winding shaft during the opening movement of the sliding element. A rotational speed of the rotatable winding shaft during the at least partial unwinding of the belt-type mechanical link from the rotatable winding shaft is controlled by the control device such that the opening speed of the sliding element during the opening movement does not exceed a predetermined maximum speed. The control device comprises an opening speed reduction component that comprises a centrifugal brake that engages the rotatable winding shaft and is configured to reduce the rotational speed of the rotatable winding shaft during the at least partial unwinding of the belt-type mechanical link from the rotatable winding shaft. The centrifugal brake comprises a brake drum and at least two brake blocks with associated brake pads which are in frictional contact with the brake drum to slow down the rotational speed of the rotatable winding shaft during the at least partial unwinding of the belt-type mechanical link from the rotatable winding shaft, if the rotational speed exceeds a predetermined threshold value.

Advantageously, the vehicle according to the present invention comprises an opening speed controlling apparatus tha't is at least suitable to reduce significantly potentially dangerous effects that high values of opening speed of a given sliding element provided on the vehicle may have on a respective sliding element arrangement as such, as well as on operators of the sliding element. In particular, the opening speed controlling apparatus of the vehicle according to the present invention is suitable to control an opening speed of the given sliding element of the vehicle, such as e. g. a sliding door of a helicopter, also during movement of the vehicle, e. g. during flight of the helicopter, in any circumstance that requires control of the opening speed. Thus, the opening speed of the given sliding element can be regulated by means of the opening speed controlling apparatus during the complete travel of the sliding element from its closing position to its opening position.

In an exemplary embodiment, the opening speed controlling apparatus comprises at least three main parts:

a) A main assembly with a rotatable winding shaft and an opening speed reduction component that comprises at least a suitable braking device. Optionally, a closing movement support element may be provided that comprises at least a suitable retracting device. The main assembly is preferably attached to the sliding element;

b) A belt-type mechanical link, preferably a belt, or alternatively a rope, a cord, or a cable, which is equipped with an attachment clip and wound onto the rotatable winding shaft in the closing position of the sliding element; and

c) A fastening mechanism, preferably a buckle, that is attached to an associated primary vehicle structure of a given vehicle.

It should be noted that the exemplary embodiment above relates to an assembly wherein the separate components are interconnected in a predefined manner. However, this interconnection may also be realized in a different manner. For instance, the main assembly can be attached to the associated primary vehicle structure, while the fastening mechanism is mounted to the sliding element. Moreover, it should be noted that the described separate components merely refer to a simplified version of the opening speed controlling apparatus. However, various other components may additionally be required for operation of the opening speed controlling apparatus, such as e. g. a transmission, shaft case, protective parts, etc.

Assuming now, for purposes of illustration, that the vehicle according to the present invention is embodied as an aircraft, in particular a rotary wing aircraft such as a helicopter, wherein the primary vehicle structure is a fuselage of the aircraft, and wherein the sliding element is a sliding door. Before opening of the sliding door at flight speed values above a specific flight speed ($f_{SE}$) the opening speed controlling apparatus described above has to be engaged by securing the attachment clip inside the buckle. The sliding door can then be opened and as it accelerates during its travel along the fuselage, e. g. during travelling in its guide rail, the belt-type mechanical link immediately starts to unwind from the rotatable winding shaft at an unwinding speed that equals the opening speed of the sliding door. The braking device, which is connected to the rotatable winding shaft, is able to control the unwinding speed of the belt-type mechanical link and, thus, the opening speed of the sliding door.

In other words, the opening speed controlling apparatus is not designed to bring the sliding door to a full stop, but it preferably works together with a suitable damping system, which is e. g. positioned at an end of a respective guide rail associated with the sliding door. This suitable damping system may e. g. be realized by means of a conventional small damping system as described above, which is well-known to the person skilled in the art. Thus, thanks to the braking action of the braking device the sliding door will not exceed during opening a maximum practicable door opening speed $v_{MAX}$ and will travel from its closing position towards its opening position in a safe and controlled manner, at which point the suitable damping system will be able to completely stop the sliding door.

Preferably, the braking device described above is embodied as a mechanical braking device, such as e. g. a centrifugal brake. However, an electrical braking system able to provide a more complex response and to control the opening speed of the sliding door while being able to bring it to a complete stop may likewise be considered.

As described above, the opening speed controlling apparatus may also comprise a suitable retracting device, which may be connected to the rotatable winding shaft. Such a suitable retracting device may advantageously be used to keep the belt-like mechanical link tensioned once the sliding door has reached its opening position, in order to avoid excessive flutter of the belt-like mechanical link, and to wind up the belt-type mechanical link onto the rotatable winding shaft when the sliding door is being closed. This suitable retracting device may also be used as an aid for an operator to close the sliding door.

Advantageously, both the braking and the retracting devices may rely on different principles and technologies. For instance, the braking device may be based on friction braking, e. g. as a centrifugal governor braking, viscous damping, electromagnetic braking, etc. and in all cases it is preferably designed to work as a speed governor which will prevent the sliding door from travelling at door opening speeds above $v_{MAX}$. The retracting device, in turn, may feature a spring system, an electrical system, etc. with the main purpose of keeping the belt-type mechanical link tensioned once the sliding door has reached the opening position, and of rewinding the belt-type mechanical link onto the rotatable winding shaft during closing of the sliding door.

According to one aspect, the control device of the vehicle according to the present invention comprises a mounting element that rigidly mounts the control device to the sliding element, and connecting means are provided that rigidly connect the belt-type mechanical link to the primary vehicle structure.

Alternatively, the control device may comprise a mounting element that rigidly mounts the control device to the primary vehicle structure, and connecting means are provided that rigidly connect the belt-type mechanical link to the sliding element.

The connecting means may comprise an attachment clip that is rigidly mounted to the belt-type mechanical link. A buckle that is configured to engage with the attachment clip may be provided. The buckle is preferably rigidly mounted to the primary vehicle structure or the sliding element.

According to one aspect, the buckle comprises a release button that is operable to release the attachment clip.

The opening speed reduction component may be coupled to the rotatable winding shaft.

According to one aspect, the control device comprises a closing movement support element that is operable to apply a load on the rotatable winding shaft in a rotation direction of the rotatable winding shaft that is associated with a winding of the belt-type mechanical link onto the rotatable winding shaft.

The closing movement support element preferably comprises a spring casing and a rotational spring that is accommodated in the spring casing and coupled to the rotatable winding shaft.

According to one aspect, the rotatable winding shaft comprises a longitudinal slot for fixation of the belt-type mechanical link.

The belt-type mechanical link may be one of a belt, a rope, a cord, and a cable.

According to one aspect, the vehicle described above is embodied as an aircraft, wherein the primary vehicle structure is a fuselage of the aircraft, and wherein the sliding element is a sliding door or a sliding window.

The present invention further provides an opening speed controlling apparatus for controlling an opening speed of a sliding element of an associated vehicle during an opening movement of the sliding element. The opening speed controlling apparatus comprises a control device with a rotatable winding shaft that is configured to rotate during an opening movement of the sliding element; and a belt-type mechanical link that is configured to couple the sliding element mechanically to an associated primary vehicle structure of the associated vehicle and that is at least partly wound onto the rotatable winding shaft in a standby mode. The belt-type mechanical link is adapted to be at least partially unwound from the rotatable winding shaft during an opening movement of the sliding element. A rotational speed of the rotatable winding shaft during the at least partial unwinding of the belt-type mechanical link from the rotatable winding shaft is controlled by the control device such that an opening speed of the sliding element during an opening movement does not exceed a predetermined threshold value.

The control device comprises an opening speed reduction component that comprises a centrifugal brake that engages the rotatable winding shaft and is configured to reduce the rotational speed of the rotatable winding shaft during the at least partial unwinding of the belt-type mechanical link from the rotatable winding shaft. The centrifugal brake comprises a brake drum and at least two brake blocks with associated brake pads which are in frictional contact with the brake drum to slow down the rotational speed of the rotatable winding shaft during the at least partial unwinding of the belt-type mechanical link from the rotatable winding shaft, if the rotational speed exceeds a predetermined threshold value.

A major advantage of this opening speed controlling apparatus consists in enabling control of a respective opening speed of a sliding element during an underlying entire duration of a given opening phase. Said control is achieved thanks to the control device. This guarantees that the sliding element will reach its opening position, i. e. an end of an associated guide rail, with a suitable opening speed that allows an associated damping system to bring the sliding element safely to a full stop. Without the control of the respective opening speed according to the present invention the damping system would not be able to stop the sliding element safely when it is opened with a comparatively high opening speed, which may e. g. occur if the sliding element is a sliding door of an aircraft such as a helicopter, which is opened during high speed flight.

Compared to the implementation of a conventional electrically powered sliding door, provision of the opening speed controlling apparatus according to the present invention is considerably simpler and easier to integrate onto an existing vehicle. The main modifications necessary for the installation of the opening speed controlling apparatus on pre-existing vehicles are related to the need for some fixation points for the control device and the belt-type mechanical link on the sliding door and a respective primary vehicle structure. For instance, the introduction of modest structure reinforcements and lining covers may be required for a correct and flawless functioning of the opening speed controlling apparatus.

Advantageously, the opening speed controlling apparatus according to the present invention is self-sustaining in the sense that no connection to an external power source is required for its operation. Another advantage is given by the possibility to engage the opening speed controlling apparatus only when necessary, made possible by the use of the belt-type mechanical link, which is preferably engageable only in case of need.

Moreover, the control device may advantageously be provided with a braking device, such as a centrifugal brake, which may also be designed to be regulating, in the sense that the torque it produces can be adjusted: some of the problem parameters may vary depending on the temperature (e. g. friction of the sliding element), on an underlying travelling speed of the vehicle, and travel condition (e. g. force on the sliding element) or on the wear of respective sliding element components (e. g. friction of the sliding element). Hence, a regulating braking device with two or more modes may guarantee optimal performances in various working conditions. The regulating braking device may be actuated manually, e. g. while switching between different modes, or automatically, e. g. by using a self-regulating eddy current brake, which adjusts its braking torque depending on a respectively applied load, featuring "infinite" regulations in its operating speed range.

Preferred embodiments of the invention are outlined by way of example in the following description with reference to the attached drawings. In these attached drawings, identical or identically functioning components and elements are labeled with identical reference numbers and characters and are, consequently, only described once in the following description.

- Figure 1 shows a perspective view of a vehicle that is adapted to receive a sliding element arrangement according to the present invention,

- Figure 2 shows a schematic view of a sliding element arrangement with a sliding element in a closing position and an opening speed controlling apparatus according to the present invention,

- Figure 3 shows a schematic view of the sliding element arrangement of Figure 2 with the sliding element and the opening speed controlling apparatus during an opening movement of the sliding element,

- Figure 4 shows a perspective view of the opening speed controlling apparatus of Figure 2 and Figure 3 with associated connecting means and a control device,

- Figure 5 shows a perspective view of the connecting means of Figure 4,

- Figure 6 shows a perspective view of the control device of Figure 4 with a rotatable winding shaft,

- Figure 7 shows a perspective view of the rotatable winding shaft of Figure 6,

- Figure 8 shows a perspective view of a bracket-type control device mounting element,

- Figure 9 shows a perspective view of the rotatable winding shaft of Figure 7 with coupling elements,

- Figure 10A shows a top view of a door opening speed reduction component according to the present invention,

- Figure 10B shows a perspective view of the door opening speed reduction component of Figure 10A,

- Figure 11 shows a top view of a door closing movement support element with a rotational spring according to the present invention,

- Figure 12 shows a perspective view of the rotational spring of Figure 11,

- Figure 13A shows a partial sectional top view of the sliding element arrangement of Figure 2,

- Figure 13B shows a partial sectional top view of the sliding element arrangement of Figure 3,

- Figure 14 shows a top view of the sliding element of Figure 13B,

- Figure 15 shows a perspective view of the control device of Figure 6 and a sectional view of the rotatable winding shaft of Figure 7, and

- Figure 16 shows an exemplary centrifugal brake diagram according to the present invention.

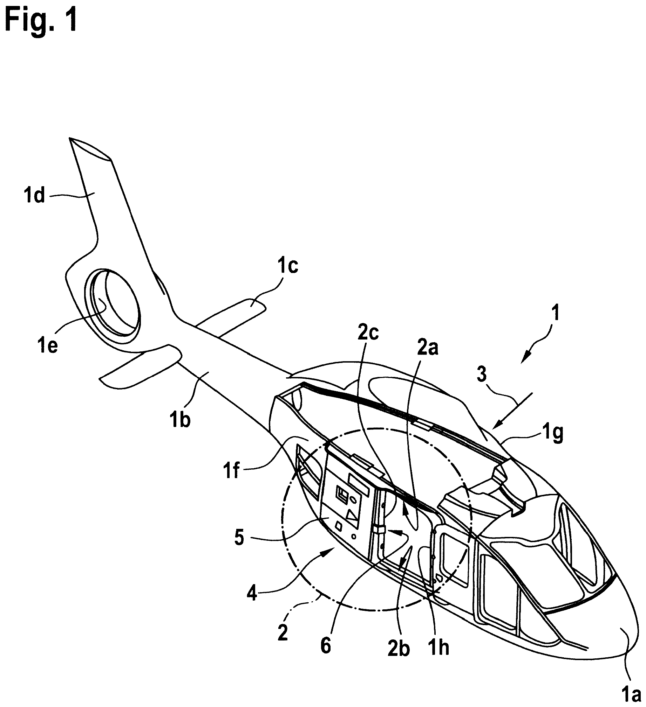

Figure 1 shows an exemplary vehicle 1 with a primary vehicle structure 1a. The primary vehicle structure 1 is a structure that carries loads from or to another structure or structures of the vehicle 1.

The vehicle 1 is exemplarily illustrated as an aircraft, in particular as a rotary wing aircraft and, more particularly, as a helicopter, wherein the primary vehicle structure 1a embodies a fuselage. Thus, for purposes of simplicity and clarity, the vehicle 1 is hereinafter referred to as the "helicopter 1" and the primary vehicle structure 1a as the "fuselage 1a". The present invention is, however, not limited to helicopters and can likewise be applied to any other vehicle, in particular to a vehicle that is controllable in a flowing medium, such as air or water, independent of a particular configuration thereof.

Illustratively, the fuselage 1a of the helicopter 1 defines a tail boom 1b, which exemplarily comprises a tail wing 1c, a fin 1d and a shroud 1e for accommodation of a suitable counter-torque device, such as a tail rotor, which is configured to provide counter-torque during operation in order to balance the helicopter 1 in terms of yaw. The tail boom 1b may further be provided e. g. with a horizontal stabilizer, a bumper and so on.

It should be noted that only the fuselage 1a with the tail boom 1b are shown in Figure 1 for purposes of simplicity and clarity of the drawings. However, other conventional components, such as e. g. a main rotor and a landing gear of the helicopter 1, are not shown, as they are well-known to the person skilled in the art and not part of the present invention and would, thus, only unnecessarily encumber and complicate the representation.

Illustratively, the fuselage 1a comprises at least two longitudinal side walls, a portside wall 1f and a starboard side wall 1g, both of which are preferably connected to the tail boom 1b. The fuselage 1a preferably defines at least a cockpit, as well as a passenger cabin and/or a cargo compartment. However, for simplicity and clarity of the description, such a cockpit, passenger cabin and cargo compartment are not explained in greater detail.

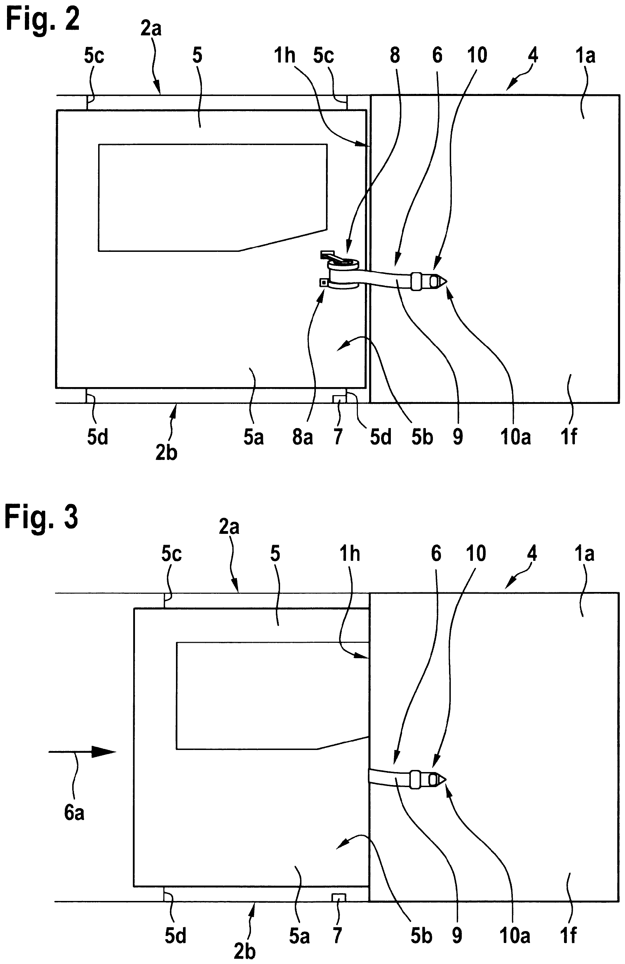

According to one aspect, at least the portside wall 1f is provided with a sliding element region 2, wherein a sliding element arrangement 4 is arranged. The sliding element arrangement 4 is shown in Figure 2 and Figure 3 in greater detail, seen in a viewing direction 3 of Figure 1.

Illustratively, the sliding element arrangement 4 is associated with at least one upper and at least one lower rail arrangement 2a, 2b. Preferably, the upper and lower rail arrangements 2a, 2b are attached to the fuselage 1a.

More specifically, the upper and lower rail arrangements 2a, 2b are preferably adapted for slidably receiving a sliding element 5, which in turn is adapted for opening or closing an aperture 1h provided in the sliding element region 2 of the portside wall 1f, preferentially sealingly. By way of example, the aperture 1h is equipped with a frame 2c.

According to one aspect, the starboard side wall 1g is also provided with a sliding element region, such as the sliding element region 2, wherein at least one upper and at least one lower rail arrangements, such as the upper and lower rail arrangements 2a, 2b, are attached to the fuselage 1a and wherein an aperture, such as the aperture 1h, is provided for reception of a sliding element, such as the sliding element 5. More specifically, the starboard side wall 1g is preferably provided with a sliding element arrangement, such as the sliding element arrangement 4. However, for purposes of simplicity and clarity of the drawings, the sliding element region of the starboard side wall 1g is not illustrated in greater detail.

Figure 2 shows the sliding element arrangement 4 of Figure 1, which is seen in the viewing direction 3 of Figure 1 and exemplarily arranged at the portside wall 1f of the fuselage 1a of the helicopter 1 of Figure 1. The sliding element arrangement 4 illustratively comprises the upper and lower rail arrangements 2a, 2b of Figure 1, which are preferably attached to the portside wall 1f of the helicopter 1 of Figure 1 by means of suitable fasteners, such as screws, bolts, rivets and so on.

As described above with reference to Figure 1, the upper and lower rail arrangements 2a, 2b are adapted for slidably supporting the sliding element 5 that is provided for opening or closing the aperture 1h of the portside wall 1f of the helicopter 1 of Figure 1, preferably sealingly. According to one aspect, the sliding element 5 comprises at least one plate-shaped support 5a.

The sliding element 5 is illustratively embodied as a sliding door and, consequently, the plate-shaped support 5a e. g. as a door leaf. Therefore, the sliding element 5 is also referred to as the "sliding door 5" and the plate-shaped support 5a as the "door leaf 5a" hereinafter, for simplicity and clarity. Accordingly, the sliding element arrangement 4 is also referred to as the "sliding door arrangement 4" hereinafter, for simplicity and clarity.

Illustratively, the sliding door 5 is shown in a closing position, wherein the sliding door 5 closes the aperture 1h of the fuselage 1a. Preferably, the sliding door 5 is equipped with upper and lower sliding arms 5c, 5d that are adapted for enabling a sliding movement of the sliding door 5 along the upper and lower rail arrangements 2a, 2b. The upper and lower sliding arms 5c, 5d are preferably rigidly mounted to the door leaf 5a by means of suitable fasteners, such as screws, bolts, rivets and so on.

However, it should be noted that the present invention is not restricted to sliding door arrangements and that other sliding element arrangements are also contemplated. For instance, the sliding element 5 may alternatively be embodied as a sliding window, so that the sliding element arrangement 4 defines a sliding window arrangement. Alternatively, the sliding element 5 may simply be a sliding panel in general, so that the sliding element arrangement 4 defines a sliding panel arrangement, and so on.

It should further be noted, that the present invention is not restricted to a helicopter having two sliding door arrangements. Instead, any vehicle having one or more sliding door arrangements, one or more sliding window arrangements, or one or more sliding panel arrangements is likewise contemplated. Furthermore, any vehicle having any combination of one or more sliding door arrangements with one or more sliding window arrangements and/or one or more sliding panel arrangements is also contemplated.

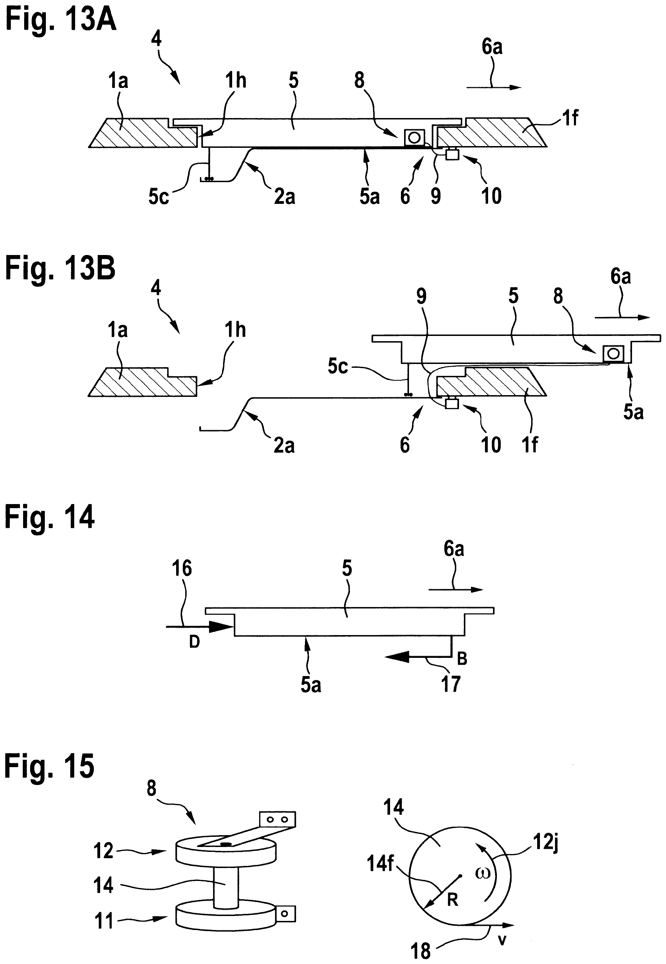

According to one aspect, the sliding door arrangement 4 is provided with an associated opening speed controlling apparatus 6. The opening speed controlling apparatus 6 is at least provided for controlling an opening speed (v in Figure 15) of the sliding door 5 during an opening movement (6a in Figure 3) of the sliding door 5. In such an opening movement (6a in Figure 3), the sliding door 5 preferably slides at least along a portion of the fuselage 1a from a closing position, wherein the sliding door 5 closes the aperture 1h of the fuselage 1a, into an opening position, wherein the aperture 1h of the fuselage 1a is at least partly open. An exemplary opening movement (6a in Figure 3) is described below with reference to Figure 3.

Furthermore, at least one door end stop damping device 7 may be provided and e. g. be associated with the lower rail arrangement 2b. The damping device 7 may be used for slowing down the sliding door 5 as it approaches an associated end of the upper and lower rail arrangements 2a, 2b at the end of the opening movement (6a in Figure 3), illustratively by acting on one of the lower sliding arms 5d in order to completely absorb the kinetic energy of the sliding door 5 at the end of the opening movement (6a in Figure 3) such that a full stop of the sliding door 5 is achieved.

The damping device 7 may be implemented by a conventional damping device, which is well-known to the person skilled in the art and, therefore, not explained in detail for brevity and conciseness. Advantageously, the damping device 7 may be used in combination with the opening speed controlling apparatus 6 such that the opening speed controlling apparatus 6 controls the opening speed (v in Figure 15) of the sliding door 5 during an opening movement (6a in Figure 3) of the sliding door 5 so that the opening speed (v in Figure 15) does not exceed a predetermined maximum speed, while the damping device 7 preferably completely absorbs the kinetic energy of the sliding door 5 at the end of the opening movement (6a in Figure 3) such that a full stop of the sliding door 5 is achieved.

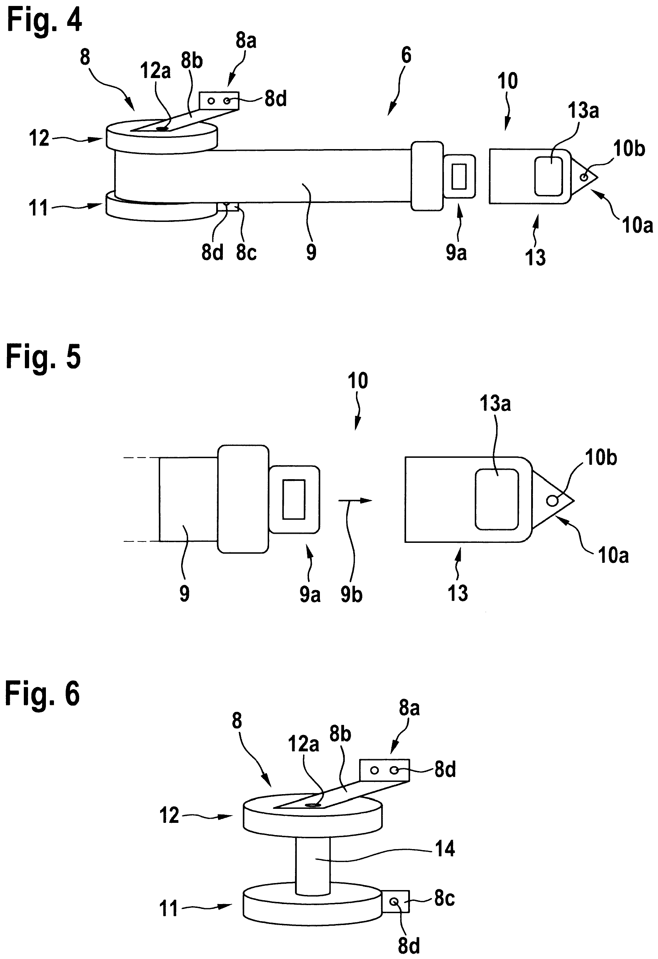

According to one aspect, the opening speed controlling apparatus 6 comprises at least a control device 8 and a belt-type mechanical link 9. Illustratively, the control device 8 is rigidly mounted to the sliding door 5, preferably to an inner surface 5b of the door leaf 5a of the sliding door 5. By way of example, the control device 8 is provided with a mounting element 8a that is rigidly mounted to the door leaf 5a by means of suitable fasteners (8d in Figure 4), such as screws, bolts, rivets and so on, so that the mounting element 8a rigidly mounts the control device 8 to the sliding door 5. The control device 8 and, more generally, the sliding door 5, is mechanically coupled to the fuselage 1a, illustratively to the portside wall 1f, via the belt-type mechanical link 9. By way of example, the belt-type mechanical link 9 is embodied by a belt. However, alternative realizations of the belt-type mechanical link 9, such as a rope, a cord, a cable, and so on are likewise contemplated. Nevertheless, for simplicity and brevity the belt-type mechanical link 9 is exemplarily referred to as the "belt 9" hereinafter.

Preferably, connecting means 10 are provided that rigidly connect the belt 9 to the fuselage 1a, illustratively to the portside wall 1f. By way of example, the connecting means 10 are provided with a mounting element 10a that is rigidly mounted to the portside wall 1f of the fuselage 1a by means of suitable fasteners (10b in Figure 4), such as screws, bolts, rivets and so on. The connecting means 10 form a part of the opening speed controlling apparatus 6.

However, it should be noted that rigidly connecting the belt 9 via the connecting means 10 to the fuselage 1a and mounting of the control device 8 via the mounting element 8a to the sliding door 5 is merely described by way of example and not for limiting the present invention accordingly. Instead, the mounting element 8a may also rigidly mount the control device 8 to the fuselage 1a while the connecting means 10 rigidly connect the belt 9 to the sliding door 5.

Furthermore, it should be noted that e. g. mounting and integrating the control device 8 into the door leaf 5a or the fuselage 1a such that flawless operation of the opening speed controlling apparatus 6 is enabled is a task that is well-known to the person skilled in the art and, therefore, not described in detail, for brevity and conciseness. This applies likewise to rigidly connecting the belt 9 via the connecting means 10 to the fuselage 1a or the door leaf 5a, which is also a task that is well-known to the person skilled in the art and, therefore, also not described in detail, for brevity and conciseness.

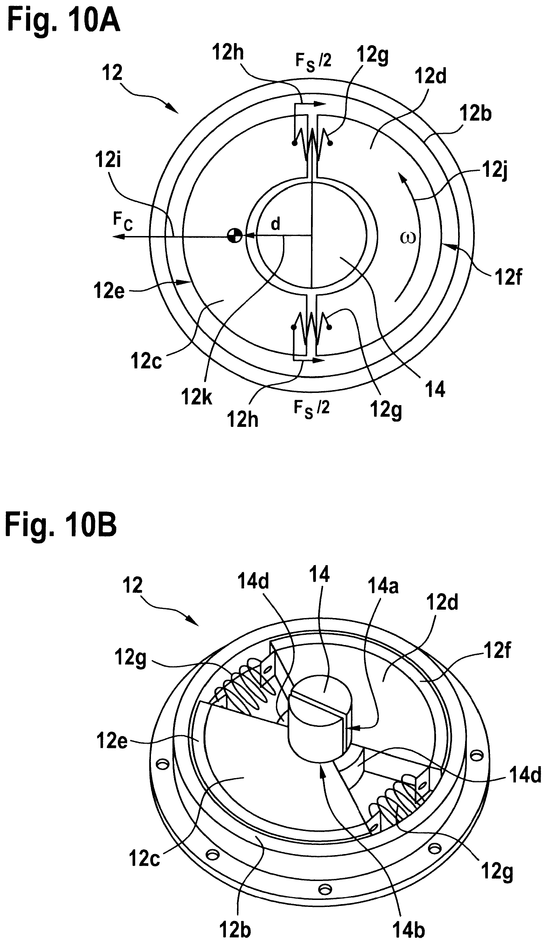

According to one aspect, the belt 9 is at least partly wound onto a rotatable winding shaft (14 in Figure 6) of the control device 8 in the closing position of the sliding door 5. During an opening movement (6a in Figure 3) of the sliding door 5 from the closing position towards an opening position, in which the aperture 1h of the fuselage 1a is at least partly open, the rotatable winding shaft (14 in Figure 6) of the control device 8 rotates such that the belt 9 is at least partially unwound from the rotatable winding shaft (14 in Figure 6) during the opening movement (6a in Figure 3) of the sliding door 5, wherein a rotational speed ($\omega$ in Figure 10A) of the rotatable winding shaft (14 in Figure 6) during the at least partial unwinding of the belt 9 from the rotatable winding shaft (14 in Figure 6) is controlled by the control device 8 such that a respective opening speed (v in Figure 15) of the sliding door 5 during the opening movement (6a in Figure 3) does not exceed a predetermined maximum speed.

Figure 3 shows the sliding door arrangement 4 with the sliding door 5 of Figure 2, which is seen in the viewing direction 3 of Figure 1 and exemplarily arranged at the portside wall 1f with the aperture 1h of the fuselage 1a of the helicopter 1 of Figure 1, during an opening movement 6a of the sliding door 5. During the opening movement 6a, the sliding door 5 illustratively slides along at least a portion of the fuselage 1a and, more particularly, of the portside wall 1f, from its closing position, as shown in Figure 2, towards its opening position, in which the aperture 1h of the fuselage 1a is at least partly open. More specifically, the upper and lower sliding arms 5c, 5d of the sliding door 5 slide along the upper and lower rail arrangements 2a, 2b of the sliding door arrangement 4.

The sliding door arrangement 4 comprises the opening speed controlling apparatus 6 of Figure 2 with the belt 9, which is rigidly connected to the fuselage 1a via the connecting means 10, and the control device 8, which is rigidly mounted to the door leaf 5a of the sliding door 5. As described above with reference to Figure 2, the belt 9 is at least partially unwound from the rotatable winding shaft (14 in Figure 6) of the control device 8, which moves together with the sliding door 5 during the opening movement 6a and is, thus, hidden by the portside wall 1f of the fuselage 1a in Figure 3.

More specifically, assuming that the sliding door 5 is opened during flight of the helicopter 1 of Figure 1 in order to perform the opening movement 6a. In this case, a respective aerodynamic load on the sliding door 5 starts accelerating it and the belt 9, which is secured on one side to the fuselage 1a through the connecting means 10 and initially wound up onto the rotatable winding shaft (14 in Figure 6) of the control device 8, starts to unwind travelling at the same speed than the sliding door 5. A respective linear motion of the sliding door 5 is, thus, converted into a rotational motion of the rotatable winding shaft (14 in Figure 6) due to the connection between the rotatable winding shaft (14 in Figure 6) and the belt 9. Once the sliding door 5 has reached a certain value of opening speed (which is also referred to as the "engagement speed"), the control device 8 is preferably self-activated, starting its control action on the unwinding speed of the belt 9, hence the opening speed of the sliding door 5, during the remaining part of the opening phase. The control device 8 is preferably set to engage shortly after opening movement 6a of the sliding door 5 has been started in order to control its opening speed for most of the travelling distance, always keeping it below a predetermined maximum value. When reaching the fully opening position of the sliding door 5, the sliding door 5 is preferably fully stopped by the damping device 7 of Figure 2. As long as the sliding door 5 remains in its opening position, the belt 9 is preferably kept tensioned by the control device 8, which may also have the purpose of at least supporting re-winding resp. winding in general of the belt 9 onto the rotatable winding shaft (14 in Figure 6) and of possibly providing an aid during a respective closing phase of the sliding door 5.

Figure 4 shows the opening speed controlling apparatus 6 of Figure 2 with the control device 8, the belt 9, and the connecting means 10. The control device 8 is provided with the mounting element 8a of Figure 2 and the connecting means 10 is provided with the mounting element 10a of Figure 2. According to Figure 2, the mounting element 8a of the control device 8 is rigidly mounted to the sliding door 5 by means of suitable fasteners 8d, such as screws, bolts, rivets and so on, and the mounting element 10a of the connecting means 10 is rigidly mounted to the portside wall 1f of the fuselage 1a by means of suitable fasteners 10b, such as screws, bolts, rivets and so on. However, for simplicity and clarity of the drawings, illustration of the sliding door 5 and the portside wall 1f of the fuselage 1a is omitted in Figure 4.

Illustratively, the mounting element 8a of the control device 8 is provided with associated mounting arms 8b, 8c, which are rigidly mounted to the sliding door 5 by means of the fasteners 8d. The mounting arm 8c is exemplarily rigidly and non-rotatably attached to an optional closing movement support element 11 of the control device 8. The mounting arm 8b is exemplarily rigidly and non-rotatably attached to an opening speed reduction component 12 of the control device 8 at an associated fixation 12a. The opening speed reduction component 12 and the optional closing movement support element 11 are preferably mechanically coupled to a rotatable winding shaft (14 in Figure 6).

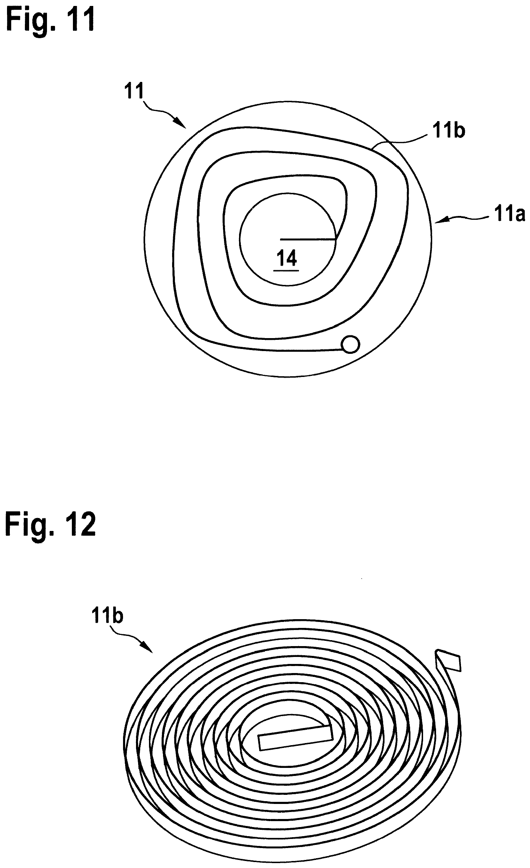

More specifically, as described above with reference to Figure 2, the control device 8 is provided with such a rotatable winding shaft (14 in Figure 6), onto which the belt 9 is at least partly wound as illustrated in Figure 4, if the sliding door 5 of Figure 2 is in its closing position. The rotatable winding shaft (14 in Figure 6) preferably engages the opening speed reduction component 12 as described below with reference to Figure 10A and Figure 10B, and the optional closing movement support element 11 as described below with reference to Figure 11.

According to one aspect, the belt 9 is provided with an attachment clip 9a that is associated with the connecting means 10. The latter are preferably further provided with a buckle 13 that is configured to engage with the attachment clip 9a, which is rigidly mounted to the belt 9.

The buckle 13 is preferably rigidly mounted to the fuselage 1a by means of the mounting element 10a in the realization illustrated in Figure 2 and Figure 3, but may likewise be rigidly mounted to the sliding door 5 by means of the mounting element 10a, as described above with reference to Figure 2. Therefore, the mounting element 10a is preferably rigidly mounted resp. integrated into the buckle 13. Illustratively, the buckle 13 is embodied by way of example similar to a conventional belt buckle and exemplarily comprises a release button 13a that is operable to release the attachment clip 9a. However, all components have to be designed in order to resist all loads originally caused by the aerodynamic force on the sliding door 5 of Figure 2 and Figure 3 and transferred to the complete system.

According to one aspect, the connecting means 10 are provided with a safety device. The latter may be suitable to prevent accidental unfastening of the belt 9. By way of example, the safety device may be implemented by means of a cover or a locking mechanism for the release button 13a, making unfastening a two steps procedure that is less liable to accidental activation.

Figure 5 shows the connecting means 10 of Figure 4 with the attachment clip 9a that is rigidly mounted to the belt 9, and the buckle 13 with the mounting element 10a and the release button 13a. Figure 5 illustrates an engagement operation of the attachment clip 9a in the buckle 13.

More specifically, the attachment clip 9a is inserted into the buckle 13 in an engagement direction 9b. Thus, the attachment clip 9a may be locked in the buckle 13 and, if required, be released subsequently by pushing the release button 13a.

Figure 6 shows the control device 8 of Figure 4 with the associated mounting arms 8b, 8c, the optional closing movement support element 11, and the opening speed reduction component 12. Figure 6 further shows a rotatable winding shaft 14 which preferably engages the opening speed reduction component 12 as described below with reference to Figure 10A and Figure 10B, and the optional closing movement support element 11 as described below with reference to Figure 11.

The opening speed reduction component 12 is preferably operable to reduce a respective rotational speed ($\omega$ in Figure 10A) of the rotatable winding shaft 14 during an at least partial unwinding of the belt 9 of Figure 4 from the rotatable winding shaft 14. The closing movement support element 11 is preferably operable to apply a load on the rotatable winding shaft 14 in a rotation direction of the rotatable winding shaft 14 that is associated with a winding of the belt 9 of Figure 4 onto the rotatable winding shaft 14. Thus, the closing movement support element 11 is suitable to reduce a respective force needed to move the sliding door 5 of Figure 2 and Figure 3 back to its closing position.

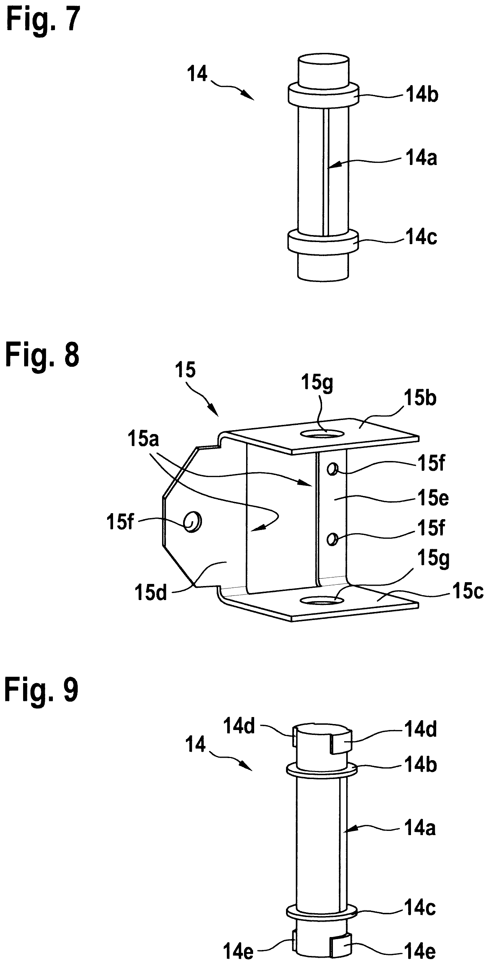

Figure 7 shows the rotatable winding shaft 14 of the control device 8 of Figure 6. Illustratively, the rotatable winding shaft 14 has a longitudinal slot 14a for fixation of the belt 9 of Figure 2 to Figure 4. The longitudinal slot 14a illustratively extends between two flanges 14b, 14c.

More specifically, the longitudinal slot 14a is preferably designed such that one end of the belt 9 of Figure 2 to Figure 4 can be passed through the longitudinal slot 14a in order to fix the belt 9 of Figure 2 to Figure 4 on the rotatable winding shaft 14. However, the length of the longitudinal slot 14a may also be chosen differently as long as the one end of the belt 9 of Figure 2 to Figure 4 can be passed therethrough. Nevertheless, fixation of a belt on a shaft with a slot is a measure that is well-known to the person skilled in the art, so that a more detailed description thereof can be omitted for brevity and conciseness.

The two flanges 14b, 14c of the rotatable winding shaft 14 are preferably provided for a rotatable coupling with the opening speed reduction component 12 and the optional closing movement support element 11 of Figure 6. In particular, the two flanges 14b, 14c are preferably embodied to allow a mounting of the opening speed reduction component 12 and the optional closing movement support element 11 of Figure 6 onto the rotatable winding shaft 14 such that both are spaced apart from each other with a minimum distance that equals a respective width of the belt 9 of Figure 2 to Figure 4, as illustrated in Figure 2 and Figure 4.

Figure 8 shows an alternative mounting element 15 that may be used with the control device 8 of Figure 4 and Figure 6 instead of the mounting element 8a of Figure 4 and Figure 6. The alternative mounting element 15 is illustratively designed as a bracket-type mounting element and, therefore, hereinafter referred to as the "bracket 15", for brevity and conciseness.

By way of example, the bracket 15 is embodied as a double-arm mounting structure 15a with two support flanges 15b, 15c and two plate-shaped mounting arms 15d, 15e. The two plate-shaped mounting arms 15d, 15e respectively extend between the two support flanges 15b, 15c. Illustratively, the two support flanges 15b, 15c and the two plate-shaped mounting arms 15d, 15e form a U-shaped structure.

Preferably, each one of the two support flanges 15b, 15c comprises an associated winding shaft accommodation 15g for accommodation of a respective axial end of the rotatable winding shaft 14 of Figure 7. The latter may, thus, be clamped between the two support flanges 15b, 15c which may respectively be seated on the two flanges 14b, 14c of the rotatable winding shaft 14 of Figure 7.

Each one of the two plate-shaped mounting arms 15d, 15e is preferably provided with one or more fastener accommodations 15f, e. g. for the fasteners 8d of Figure 4. The one or more fastener accommodations 15f may be implemented as through-holes.

Figure 9 shows the rotatable winding shaft 14 of Figure 7 with coupling elements 14d, 14e that are arranged on both axial ends of the rotatable winding shaft 14. According to one aspect, the coupling elements 14d are provided for engagement with the opening speed reduction component 12 of Figure 6 and the coupling elements 14e are provided for engagement with the closing movement support element 11 of Figure 6.

Illustratively, the coupling elements 14d, 14e are embodied as radial extensions resp. radially protruding teeth which are arranged peripherally on the rotatable winding shaft 14. However, it should be noted that the coupling elements 14d, 14e are merely shown for purposes of illustration and not for limiting the invention thereto. Instead, alternative coupling elements, which are readily available to the person skilled in the art, may likewise be employed.

It should be noted at that point that the role of the rotatable winding shaft 14 is to transform the linear motion of the sliding door 5 of Figure 2 and Figure 3 into a rotational motion by means of the moving belt 9 of Figure 2 and Figure 3, which is initially wound up around the rotatable winding shaft 14. It also has to be designed in order to support transversal loads induced by the moving sliding door 5 and a respective braking torque exerted on it by the opening speed reduction component 12. The rotatable winding shaft 14 can be connected directly to the opening speed reduction component 12 through simple dents/gaps provided by means of the coupling elements 14d, 14e and the longitudinal slot 14a. However, in case a higher rotational speed of the rotatable winding shaft 14 is necessary for a correct functioning of the opening speed reduction component 12, a simple gear mechanism can be implemented between the opening speed reduction component 12 and the rotatable winding shaft 14 in order to modify a respective speed ratio.

Figure 10A shows the opening speed reduction component 12 of the control device 8 with the rotatable winding shaft 14 of Figure 6. According to one aspect, the opening speed reduction component 12 is provided with a centrifugal brake 12b-12g that engages the rotatable winding shaft 14 and that is configured to reduce a rotational speed $\omega$ of the rotatable winding shaft 14 during an at least partial unwinding of the belt 9 of Figure 6 from the rotatable winding shaft 14. Illustratively, the unwinding is performed by rotating the rotatable winding shaft in a rotation direction that is exemplarily indicated with an arrow 12j and, hereinafter, also referred to as the "unwinding direction 12j".

More specifically, the centrifugal brake 12b-12g illustratively comprises a brake drum 12b and at least two brake blocks 12c, 12d with associated brake pads 12e, 12f. The at least two brake blocks 12c, 12d, which may also be referred to as "braking shoes", and the associated brake pads 12e, 12f are illustratively accommodated inside of the brake drum 12b, which is non-rotatably mounted to the mounting element 8a of the control device 8 of Figure 6.

Preferably, the at least two brake blocks 12c, 12d are engaged with the rotatable winding shaft 14 and interconnected by means of associated tension springs 12g, which are also illustratively accommodated inside of the brake drum 12b. The associated tension springs 12g are preferably linear springs which preferentially pull the at least two brake blocks 12c, 12d radially inwards and, more specifically, towards each other with a spring force $F_s$. By way of example, two tension springs 12g are shown, each of which provides a tension force $F_s/2$, which is illustratively labelled with the reference sign 12h.

In operation of the centrifugal brake 12b-12g, the brake pads 12e, 12f are brought into frictional contact with the brake drum 12b to slow down the rotational speed $\omega$ of the rotatable winding shaft 14 during the at least partial unwinding of the belt 9 of Figure 6 from the rotatable winding shaft 14, if the rotational speed $\omega$ exceeds a predetermined threshold value. More specifically, during the at least partial unwinding of the belt 9 of Figure 6 from the rotatable winding shaft 14, the at least two brake blocks 12c, 12d rotate with the rotatable winding shaft 14 and are initially kept in a radially inward position by the associated tension springs 12g. When the centrifugal force $F_c$, which is illustratively labelled with the reference sign 12i and acting on the at least two brake blocks 12c, 12d becomes greater than a respective retaining force of the associated tension springs 12g, i. e. the spring force $F_s$, the at least two brake blocks 12c, 12d start moving radially outwards. As a result, the at least two brake blocks 12c, 12d push the associated brake pads 12e, 12f radially outwards, thus, bringing them into frictional contact with the brake drum 12b and, accordingly, leading to a braking action. This braking action originates from the friction between the associated brake pads 12e, 12f and the brake drum 12b.

The centrifugal force $F_c$ on the at least two brake blocks 12c, 12d increases quadratically with the rotational speed $\omega$ of the rotatable winding shaft 14, i. e. $F_c = md\omega^2$, m being the mass of each one of the at least two brake blocks 12c, 12d, and d being the distance between the mass center of gravity of each one of the at least two brake blocks 12c, 12d and an underlying rotation axis of the centrifugal brake 12b-12g, respectively the rotatable winding shaft 14. This applies also to a respectively achieved braking torque $B_T = \alpha(F_c - F_s)$, with $\alpha = 2\mu d$, $\mu$ being the friction coefficient between the associated brake pads 12e, 12f and the brake drum 12b. Illustratively, d is labelled with the reference sign 12k.

In other words, the retaining force of the associated tension springs 12g, i. e. the spring force $F_s$, determines an underlying engagement speed for the braking action of the centrifugal brake 12b-12g. In other words, the smaller the spring force $F_s$ is, the faster the associated brake pads 12e, 12f come into frictional contact with the brake drum 12b.

An underlying braking force (B in Figure 14) of the centrifugal brake 12b-12g is proportional to the respectively achieved braking torque $B_T$ as described below with reference to Figure 15. Thus, the underlying braking force (B in Figure 14) always depends on the rotational speed $\omega$ of the rotatable winding shaft 14. Therefore, the centrifugal brake 12b-12g and, more generally, the opening speed reduction component 12 is not capable to achieve a complete resp. full stop of the rotatable winding shaft 14 and, thus, of the sliding door 5 of Figure 3, but it will search for an equilibrium condition between an applied load and the braking force (B in Figure 14), as described in more detail below with reference to Figure 15.

Figure 10B shows the opening speed reduction component 12 of the control device 8 of Figure 6 with the rotatable winding shaft 14 and the centrifugal brake 12b-12g of Figure 10A. Figure 10B further illustrates the centrifugal brake 12b-12g with the brake drum 12b, the at least two brake blocks 12c, 12d, the associated brake pads 12e, 12f and the tension springs 12g.

According to one aspect, the rotatable winding shaft 14 is coupled to the centrifugal brake 12b-12g and, thus, to the opening speed reduction component 12, via the coupling elements 14d of Figure 9. In operation, the coupling elements 14d entrain the at least two brake blocks 12c, 12d in a rotary movement during rotation of the rotatable winding shaft 14 in the unwinding direction 12j of Figure 10A.

Figure 11 shows the closing movement support element 11 of the control device 8 with the rotatable winding shaft 14 of Figure 6. According to one aspect, the closing movement support element 11 is provided with a spring casing 11a and a rotational spring 11b that is accommodated in the spring casing 11a and coupled to the rotatable winding shaft 14. Preferably, an inner end of the rotational spring 11b is fixedly mounted to the rotatable winding shaft 14 as illustrated, while an outer end of the rotational spring 11b is fixedly mounted to the spring casing 11a. The spring casing 11a is non-rotatably mounted to the mounting element 8a of the control device 8 of Figure 6.

More specifically, the rotational spring 11b is shown in loaded state, which occurs in the opening position of the sliding door 5 according to Figure 3. In the loaded state, the rotational spring 11b is unwound to a certain degree and, thus, tensioned such that the rotatable winding shaft 14 is loaded via the rotational spring 11b for rotation in a rotation direction that is opposed to the unwinding direction 12j of Figure 10A. This rotation direction corresponds to a winding rotation direction of the rotatable winding shaft 14.

At that point it should be noted that once the sliding door 5 of Figure 3 has reached its opening position and it has been stopped by the damping device 7 of Figure 2, the control device 8 is preferably still activated and the belt 9 of Figure 3 is preferably still engaged and fastened. Therefore, in order to prevent undesired flutter of the belt 9 of Figure 3, which is exposed to a respective air flow, the rotational spring 11b is needed to keep it tensioned. As described above, this rotational spring 11b, which is located inside of the spring casing 11a, allows the belt 9 of Figure 3 to re-wind around the rotatable winding shaft 14 during a respective closing phase of the sliding door 5 of Figure 3.

Consequently, the closing movement support element 11 may also be used as an aid system for an operator during closure of the sliding door 5 of Figure 3: this can be achieved for example using an electrical system (electrical motor). The force from this electrical system can reduce the force that the operator has to exert in order to move the sliding door 5 of Figure 3 towards its closing position.

Figure 12 shows the rotational spring 11b of Figure 11. Figure 12 further illustrates an exemplary spiral form of the rotational spring 11b.

Figure 13A shows the sliding door arrangement 4 with the sliding door 5 of Figure 2, which is exemplarily arranged at the portside wall 1f with the aperture 1h of the fuselage 1a of the helicopter 1 of Figure 1, with the sliding door 5 in its closing position according to Figure 2. Figure 13A illustrates an exemplary full integration of the control device 8 of the opening speed controlling apparatus 6 of Figure 2 into the door leaf 5a of the sliding door 5, as well as an exemplary surface mounting of the connecting means 10 of the opening speed controlling apparatus 6 of Figure 2 to the portside wall 1f. The belt 9 of Figure 2 mechanically couples the control device 8 to the connecting means 10.

Figure 13B shows the sliding door arrangement 4 with the sliding door 5 of Figure 13A, which is exemplarily arranged at the portside wall 1f with the aperture 1h of the fuselage 1a of the helicopter 1 of Figure 1. However, in contrast to Figure 13A the sliding door 5 is now shown in its opening position according to Figure 3. Figure 13B illustrates the belt 9 of Figure 13A which mechanically couples the control device 8 to the connecting means 10, and which is arranged between the sliding door 5 and the portside wall 1f in the opening position of the sliding door 5.

Figure 14 shows the sliding door 5 of Figure 13A and Figure 13B for illustrating associated simplified kinematics during the opening movement 6a of the sliding door 5 from its closing position according to Figure 13A towards its opening position according to Figure 13B. During the opening movement 6a, the sliding door 5 is subjected to a component D of the aerodynamic force acting on the sliding door 5 in a direction that is oriented in parallel to the opening movement 6a. The component D of the aerodynamic force acting on the sliding door 5 is illustrated with an arrow 16.

Furthermore, according to one aspect the opening speed controlling apparatus 6 of Figure 13A and Figure 13B exerts a braking force B on the sliding door 5 in a direction that is opposed to the direction 16 of the component D of the aerodynamic force acting on the sliding door 5. The braking force B is illustrated with an arrow 17.

Figure 15 shows the control unit 8 of the opening speed reduction component 12 with the rotatable winding shaft 14 of Figure 10A for illustrating associated simplified kinematics during the opening movement 6a of the sliding door 5 of Figure 14 from its closing position according to Figure 13A towards its opening position according to Figure 13B. As described above with reference to Figure 10A, the opening speed reduction component 12 is not capable to achieve a complete resp. full stop of the rotatable winding shaft 14 and, thus, of the sliding door 5 of Figure 14, but it will search for an equilibrium condition between an applied load, i. e. the component D of the aerodynamic force acting on the sliding door 5 according to Figure 14, and the braking force B: $D$ = B. Accordingly, the centrifugal brake 12b-12g of Figure 10A of the opening speed reduction component 12 has to be designed in order to reach the equilibrium condition during the opening movement 6a of the sliding door 5 of Figure 14, in particular for a value of the rotational speed $\omega$ of the rotatable winding shaft 14 of Figure 10a that corresponds to a predetermined linear opening speed $V_D$ of the sliding door 5 of Figure 14 that is to be achieved.

The conversion as such from the rotational speed $\omega$ in the unwinding direction 12j of Figure 10A to a linear speed v, which is illustrated with an arrow 18, is straightforward: $v = \omega*R$, just like the conversion from braking force to braking torque: $B_T = B*R$, R being a respective radius of the rotatable winding shaft 14, which is illustrated with an arrow 14f. Thus, starting with the predetermined linear opening speed $V_D$ of the sliding door 5 of Figure 14 that is to be achieved for a rotatable winding shaft 14 having a predetermined shaft radius R, a required rotational speed $\omega_D$ that must be adjusted is determined as being: $\omega_D = V_D/R$.

At the required rotational speed $\omega_D$, the centrifugal brake 12b-12g of Figure 10A of the opening speed reduction component 12 must apply a braking torque $B_T$ to the rotatable winding shaft 14 that is able to compensate a given torque $D_T$ exerted by the component D of the aerodynamic force acting on the sliding door 5 according to Figure 14, i. e. $B_T = D_T$. Consequently, the centrifugal brake 12b-12g of Figure 10A of the opening speed reduction component 12 must be sized for a maximally estimated given torque $D_T$, which occurs during a respectively possible highest flight speed of the helicopter 1 of Figure 1, and regulation can be implemented in order to tune an underlying braking action considering possible operating conditions, such as e. g. temperature, flight speed, etc..

According to one aspect, a gear connection between the rotatable winding shaft 14 and the centrifugal brake 12b-12g of Figure 10A of the opening speed reduction component 12 may be necessary in order for the latter to reach the required rotational speed $\omega_D$ and, thus, the required braking torque $B_T$. The gear connection can alternatively be performed by any other means which are suitable to adjust the required rotational speed $\omega_D$ for the rotatable winding shaft 14 and the centrifugal brake 12b-12g of Figure 10A of the opening speed reduction component 12, such as e. g. a pulley mechanism.

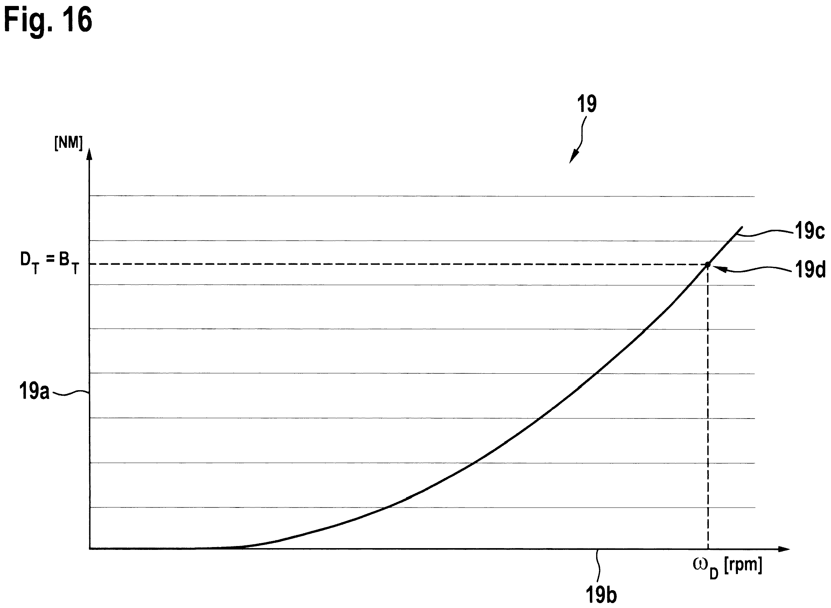

Figure 16 shows a centrifugal brake diagram 19 which illustrates operation of the centrifugal brake 12b-12g of the opening speed reduction component 12 of Figure 10A on the basis of the simplified kinematics according to Figure 14 and Figure 15. The centrifugal brake diagram 19 shows the respectively achieved braking torque $B_T$ illustrated on an ordinate 19a dependent on a respectively adjusted rotational speed $\omega$ of the rotatable winding shaft 14 of Figure 10A illustrated on an abscissa 19b. Furthermore, the centrifugal brake diagram 19 shows an exemplary centrifugal brake curve 19c that represents braking torque values that are achieved at respectively associated rotational speed values.

More specifically, Figure 16 illustrates the equilibrium condition of the opening speed reduction component 12 of Figure 10A, i. e. a point of equilibrium 19d, which is achieved at the required rotational speed $\omega_D$. At this required rotational speed $\omega_D$, the centrifugal brake 12b-12g of the opening speed reduction component 12 of Figure 10A applies the braking torque $B_T$ to the rotatable winding shaft 14 of Figure 10A that is able to compensate the torque $D_T$ exerted by the component D of the aerodynamic force acting on the sliding door 5 according to Figure 14, i. e. $B_T = D_T$.

It should be noted that the above described realizations are merely described to illustrate possible realizations of the present invention, but not in order to restrict the present invention thereto. Instead, multiple modifications and variations of the invention are possible and should, therefore, also be considered as being part of the invention. For instance, the above-described sliding door arrangement involves an opening speed controlling apparatus with a centrifugal brake. Such a centrifugal brake is completely mechanical and does not need to be connected to a power source.

It should be noted that in addition to all components and elements described above, supplementary components may be used to protect the belt, the helicopter linings, to prevent wear and to store the opening speed controlling apparatus according to the present invention in a safe and convenient manner.

Reference List

| 1 | rotary wing aircraft |
| 1a | fuselage |
| 1b | tail boom |
| 1c | tail wing |
| 1d | fin |

| 1e | tail rotor shroud |
|---|---|
| 1f | portside wall |
| 1g | starboard side wall |
| 1h | side wall aperture |
| 2 | sliding door region |
| 2a | upper rail arrangement |
| 2b | lower rail arrangement |
| 2c | sliding door frame |
| 3 | viewing direction |
| 4 | sliding door arrangement |
| 5 | portside sliding door |
| 5a | door leaf |
| 5b | door leaf inner surface |
| 5c | upper sliding arms |
| 5d | lower sliding arms |
| 6 | door opening speed controlling apparatus |
| 6a | door opening movement |
| 7 | door end stop damping devices |
| 8 | control device |
| 8a | control device mounting element |
| 8b, 8c | mounting arms |
| 8d | fasteners |
| 9 | belt-type mechanical link |
| 9a | mechanical link attachment clip |
| 9b | engagement direction |
| 10 | fuselage-side connecting means |
| 10a | connecting means mounting element |
| 10b | fastener |
| 11 | door closing movement support element |
| 11a | spring casing |
| 11b | rotational spring |
| 12 | door opening speed reduction component |
| 12a | speed reduction component fixation |
| 12b | brake drum |
| 12c, 12d | brake blocks |
| 12e, 12f | brake pads |
| 12g | tension springs |
| 12h | spring force |
| 12i | centrifugal force |
| 12j | rotation direction |
| 12k | distance of mass vector |
| 13 | belt buckle |
| 13a | release button |
| 14 | winding shaft |
| 14a | longitudinal slot |
| 14b, 14c | flanges |
| 14d, 14e | coupling elements |
| 14f | shaft radius |
| 15 | bracket-type control device mounting element |
| 15a | double-arm mounting structure |
| 15b, 15c | winding shaft support flanges |
| 15d, 15e | mounting arms |
| 15f | fastener accommodations |
| 15g | winding shaft accommodations |
| 16 | aerodynamic force component |
| 17 | braking force |
| 18 | sliding door opening speed |

| 19 | centrifugal brake diagram |
|---|---|
| 19a | braking torque ordinate |
| 19b | rotational speed abscissa |
| 19c | centrifugal brake curve |
| 19d | point of equilibrium |

**Claims**

1. A vehicle (1) with a primary vehicle structure (1a) that is provided with an aperture (1h), comprising a sliding element arrangement (4) with a sliding element (5) that is adapted for closing the aperture (1h) of the primary vehicle structure (1a) in a closing position and for sliding along at least a portion of the primary vehicle structure (1a) during an opening movement (6a) of the sliding element (5) into an opening position, in which the aperture (1h) of the primary vehicle structure (1a) is at least partly open, wherein an opening speed controlling apparatus (6) is provided for controlling an opening speed (v) of the sliding element (5) during the opening movement (6a), the opening speed controlling apparatus (6) comprising:

   a control device (8) with a rotatable winding shaft (14) that rotates during the opening movement (6a);
   a belt-type mechanical link (9) that mechanically couples the sliding element (5) to the primary vehicle structure (1a) and that is at least partly wound onto the rotatable winding shaft (14) in the closing position of the sliding element (5);
   wherein the belt-type mechanical link (9) is at least partially unwound from the rotatable winding shaft (14) during the opening movement (6a) of the sliding element (5), and wherein a rotational speed (ω) of the rotatable winding shaft (14) during the at least partial unwinding of the belt-type mechanical link (9) from the rotatable winding shaft (14) is controlled by the control device (8) such that the opening speed (v) of the sliding element (5) during the opening movement (6a) does not exceed a predetermined maximum speed,
   wherein the control device (8) comprises an opening speed reduction component (12) that comprises a centrifugal brake (12b-12g) that engages the rotatable winding shaft (14) and is configured to reduce the rotational speed (ω) of the rotatable winding shaft (14) during the at least partial unwinding of the belt-type mechanical link (9) from the rotatable winding shaft (14), **characterized in that**:
   the centrifugal brake (12b-12g) comprises a brake drum (12b) and at least two brake blocks (12c, 12d) with associated brake pads (12e, 12f) which are in frictional contact with the brake drum (12b) to slow down the rotational speed (ω) of the rotatable winding shaft (14) during the at least partial unwinding of the belt-type mechanical link (9) from the rotatable winding shaft (14), if the rotational speed (ω) exceeds a predetermined threshold value.

2. The vehicle (1) of claim 1, wherein the control device (8) comprises a mounting element (8a; 15) that rigidly mounts the control device (8) to the sliding element (5), and wherein connecting means (10) are provided that rigidly connect the belt-type mechanical link (9) to the primary vehicle structure (1a).

3. The vehicle (1) of claim 1, wherein the control device (8) comprises a mounting element (8a; 15) that rigidly mounts the control device (8) to the primary vehicle structure (1a), and wherein connecting means (10) are provided that rigidly connect the belt-type mechanical link (9) to the sliding element (5).

4. The vehicle (1) of claim 2 or 3, wherein the connecting means (10) comprises an attachment clip (9a) that is rigidly mounted to the belt-type mechanical link (9), and a buckle (13) that is configured to engage with the attachment clip (9a), and wherein the buckle (13) is rigidly mounted to the primary vehicle structure (1a) or the sliding element (5).

5. The vehicle (1) of claim 4, wherein the buckle (13) comprises a release button (13a) that is operable to release the attachment clip (9a).

6. The vehicle (1) of any one of the preceding claims, wherein the opening speed reduction component (12) is coupled to the rotatable winding shaft (14).

7. The vehicle (1) of any one of the preceding claims, wherein the control device (8) comprises a closing movement support element (11) that is operable to apply a load on the rotatable winding shaft (14) in a rotation direction of the rotatable winding shaft (14) that is associated with a winding of the belt-type mechanical link (9) onto the rotatable winding shaft (14).

8. The vehicle (1) of claim 7, wherein the closing movement support element (11) comprises a spring casing (11a) and a rotational spring (11b) that is accommodated in the spring casing (11a) and coupled to the rotatable winding shaft (14).

9. The vehicle (1) of any one of the preceding claims, wherein the rotatable winding shaft (14) comprises a longitudinal slot (14a) for fixation of the belt-type mechanical link (9).

10. The vehicle (1) of any one of the preceding claims, wherein the belt-type mechanical link (9) is one of a belt, a rope, a cord, and a cable.

11. The vehicle (1) of any one of the preceding claims, which is embodied as an aircraft, wherein the primary vehicle structure is a fuselage (1a) of the aircraft (1), and wherein the sliding element is a sliding door (5) or a sliding window.

12. An opening speed controlling apparatus (6) for controlling an opening speed of a sliding element (5) of an associated vehicle (1) during an opening movement (6a) of the sliding element (5), the opening speed controlling apparatus (6) comprising:

a control device (8) with a rotatable winding shaft (14) that is configured to rotate during an opening movement (6a) of the sliding element (5); a belt-type mechanical link (9) that is configured to couple the sliding element (5) mechanically to an associated primary vehicle structure (1a) of the associated vehicle (1) and that is at least partly wound onto the rotatable winding shaft (14) in a standby mode; wherein the belt-type mechanical link (9) is adapted to be at least partially unwound from the rotatable winding shaft (14) during an opening movement (6a) of the sliding element (5), and wherein a rotational speed of the rotatable winding shaft (14) during the at least partial unwinding of the belt-type mechanical link (9) from the rotatable winding shaft (14) is controlled by the control device (8) such that an opening speed of the sliding element (5) during an opening movement (6a) does not exceed a predetermined threshold value, wherein the control device (8) comprises an opening speed reduction component (12) that comprises a centrifugal brake (12b-12g) that engages the rotatable winding shaft (14) and is configured to reduce the rotational speed (ω) of the rotatable winding shaft (14) during the at least partial unwinding of the belt-type mechanical link (9) from the rotatable winding shaft (14), **characterized in that**: the centrifugal brake (12b-12g) comprises a brake drum (12b) and at least two brake blocks (12c, 12d) with associated brake pads (12e, 12f) which are in frictional contact with the brake drum (12b) to slow down the rotational speed (ω) of the rotatable winding shaft (14) during the at least partial unwinding of the belt-type mechanical link (9) from the rotatable winding shaft (14), if the rotational speed (ω) exceeds a predetermined threshold value.

**Patentansprüche**

1. Fahrzeug (1) mit einer primären Fahrzeugstruktur (1a), die mit einer Öffnung (1h) versehen ist, umfassend eine Schiebeelementanordnung (4) mit einem Schiebeelement (5), das eingerichtet ist, die Öffnung (1h) der primären Fahrzeugstruktur (1a) in einer Schließstellung zu verschließen und bei einer Öffnungsbewegung (6a) des Schiebeelements (5) in eine Offenstellung, in der die Öffnung (1h) der primären Fahrzeugstruktur (1a) zumindest teilweise offen ist, entlang zumindest eines Abschnitts der primären Fahrzeugstruktur (1a) zu gleiten, wobei eine Öffnungsgeschwindigkeits-Steuerungsvorrichtung (6) zum Steuern einer Öffnungsgeschwindigkeit (v) des Schiebeelements (5) während der Öffnungsbewegung (6a) vorgesehen ist, wobei die Öffnungsgeschwindigkeits-Steuerungsvorrichtung (6) umfasst:

   eine Steuereinrichtung (8) mit einer drehbaren Wickelwelle (14), die sich während der Öffnungsbewegung (6a) dreht;
   ein riemenartiges mechanisches Verbindungsglied (9), das das Schiebeelement (5) mechanisch mit der primären Fahrzeugstruktur (1a) koppelt und das in der Schließposition des Schiebeelements (5) zumindest teilweise auf die drehbare Wickelwelle (14) aufgewickelt ist; wobei das riemenartige mechanische Verbindungsglied (9) während der Öffnungsbewegung (6a) des Schiebeelements (5) zumindest teilweise von der drehbaren Wickelwelle (14) abgewickelt wird, und wobei eine Drehzahl ($\omega$) der drehbaren Wickelwelle (14) während des zumindest teilweisen Abwickelns des riemenartigen mechanischen Verbindungsglieds (9) von der drehbaren Wickelwelle (14) durch die Steuereinrichtung (8) so gesteuert wird, dass die Öffnungsgeschwindigkeit (v) des Schiebeelements (5) während der Öffnungsbewegung (6a) eine vorgegebene Höchstgeschwindigkeit nicht überschreitet,
   wobei die Steuereinrichtung (8) eine Öffnungsgeschwindigkeitsreduzierungskomponente (12) umfasst, die eine Fliehkraftbremse (12b-12g) umfasst, die an der drehbaren Wickelwelle (14) angreift und konfiguriert ist, um die Drehgeschwindigkeit ($\omega$) der drehbaren Wickelwelle (14) während des zumindest teilweisen Abwickelns des riemenartigen mechanischen Verbindungsglieds (9) von der drehbaren Wickelwelle (14) zu reduzieren,
   **dadurch gekennzeichnet, dass**:
   die Fliehkraftbremse (12b-12g) eine Bremstrommel (12b) und mindestens zwei Bremsklötze (12c, 12d) mit zugeordneten Bremsbelägen (12e, 12f) umfasst, die während des zumindest teilweisen Abwickelns des riemenartigen mechanischen Verbindungsglieds (9) von der drehbaren Wickelwelle (14) mit der Bremstrommel (12b) in Reibkontakt stehen, um die Drehzahl ($\omega$) der drehbaren Wickelwelle (14) zu verlangsamen, wenn die Drehzahl ($\omega$) einen vorgegebenen Schwellenwert überschreitet.

2. Fahrzeug (1) nach Anspruch 1, bei dem die Steuereinrichtung (8) ein Befestigungselement (8a; 15) umfasst, das die Steuereinrichtung (8) starr an dem Schiebeelement (5) befestigt, und bei dem Verbindungsmittel (10) vorgesehen sind, die das riemenartige mechanische Verbindungslied (9) starr mit der primären Fahrzeugstruktur (1a) verbinden.

3. Fahrzeug (1) nach Anspruch 1, bei dem die Steuereinrichtung (8) ein Befestigungselement (8a; 15) umfasst, das die Steuereinrichtung (8) starr an der primären Fahrzeugstruktur (1a) befestigt, und bei dem Verbindungsmittel (10) vorgesehen sind, die das riemenartige mechanische Verbindungslied (9) starr mit dem Schiebeelement (5) verbinden.

4. Fahrzeug (1) nach Anspruch 2 oder 3, bei dem die Verbindungsmittel (10) eine Befestigungsklammer (9a), die starr an dem riemenartigen mechanischen Verbindungsglied (9) angebracht ist, und eine Schnalle (13) umfassen, die konfiguriert ist, um in die Befestigungsklammer (9a) einzugreifen, und bei dem die Schnalle (13) starr an der primären Fahrzeugstruktur (1a) oder dem Schiebeelement (5) angebracht ist.

5. Fahrzeug (1) nach Anspruch 4, bei dem die Schnalle (13) einen Freigabeknopf (13a) umfasst, der betätigbar ist, um die Befestigungsklammer (9a) freizugeben.

6. Fahrzeug (1) nach einem der vorhergehenden Ansprüche, bei dem die Öffnungsgeschwindigkeitsreduzierungskomponente (12) mit der drehbaren Wickelwelle (14) gekoppelt ist.

7. Fahrzeug (1) nach einem der vorhergehenden Ansprüche, bei dem die Steuereinrichtung (8) ein Schließbewegungsunterstützungselement (11) umfasst, das betätigbar ist, um eine Last auf die drehbare Wickelwelle (14) in einer einem Aufwickeln der riemenartigen mechanischen Verbindung (9) auf die drehbare Wickelwelle (14) zugeordneten Drehrichtung der drehbaren Wickelwelle (14) aufzubringen.

8. Fahrzeug (1) nach Anspruch 7, bei dem das Schließbewegungsunterstützungselement (11) ein Federgehäuse (11a) und eine in dem Federgehäuse (11a) untergebrachte und mit der drehbaren Wickelwelle (14) gekoppelte Drehfeder (11b) umfasst.

9. Fahrzeug (1) nach einem der vorhergehenden Ansprüche, bei dem die drehbare Wickelwelle (14) einen Längsschlitz (14a) zur Fixierung des riemenartigen mechanischen Verbindungsglieds (9) umfasst.

10. Fahrzeug (1) nach einem der vorhergehenden Ansprüche, bei dem das riemenartige mechanische Verbindungsglied (9) ein Riemen, ein Seil, eine Schnur oder ein Seil ist.

11. Fahrzeug (1) nach einem der vorhergehenden Ansprüche, das als Luftfahrzeug ausgebildet ist, wobei die primäre Fahrzeugstruktur ein Rumpf (1a) des Luftfahrzeugs (1) ist, und wobei das Schiebeelement eine Schiebetür (5) oder ein Schiebefenster ist.

12. Öffnungsgeschwindigkeits-Steuerungsvorrichtung (6) zum Steuern einer Öffnungsgeschwindigkeit eines Schiebeelements (5) eines zugeordneten Fahrzeugs (1) während einer Öffnungsbewegung (6a) des Schiebeelements (5), wobei die Öffnungsgeschwindigkeits-Steuerungsvorrichtung (6) umfasst:

eine Steuereinrichtung (8) mit einer drehbaren Wickelwelle (14), die konfiguriert ist, sich während einer Öffnungsbewegung (6a) des Schiebeelements (5) zu drehen;
ein riemenartiges mechanisches Verbindungsglied (9), das konfiguriert ist, um das Schiebeelement (5) mechanisch mit einer zugeordneten primären Fahrzeugstruktur (1a) des zugeordneten Fahrzeugs (1) zu koppeln, und das in einem Bereitschaftsmodus zumindest teilweise auf die drehbare Wickelwelle (14) aufgewickelt ist;
wobei das riemenartige mechanische Verbindungsglied (9) eingerichtet ist, um während einer Öffnungsbewegung (6a) des Schiebeelements (5) zumindest teilweise von der drehbaren Wickelwelle (14) abgewickelt zu werden, und wobei eine Drehgeschwindigkeit der drehbaren Wickelwelle (14) während des zumindest teilweisen Abwickelns des riemenartigen mechanischen Verbindungsglieds (9) von der drehbaren Wickelwelle (14) durch die Steuereinrichtung (8) derart gesteuert wird, dass eine Öffnungsgeschwindigkeit des Schiebeelements (5) während einer Öffnungsbewegung (6a) einen vorgegebenen Schwellenwert nicht überschreitet,
wobei die Steuervorrichtung (8) eine Öffnungsgeschwindigkeitsreduzierungskomponente (12) umfasst, die eine Fliehkraftbremse (12b-12g) umfasst, die in die drehbare Wickelwelle (14) eingreift und konfiguriert ist, um die Drehgeschwindigkeit ($\omega$) der drehbaren Wickelwelle (14) während des zumindest teilweisen Abwickelns des riemenartigen mechanischen Verbindungsglieds (9) von der drehbaren Wickelwelle (14) zu reduzieren, **dadurch gekennzeichnet, dass**:
die Fliehkraftbremse (12b-12g) eine Bremstrommel (12b) und mindestens zwei Bremsklötze (12c, 12d) mit zugeordneten Bremsbelägen (12e, 12f) umfasst, die während des zumindest teilweisen Abwickelns des riemenartigen mechanischen Verbindungsglieds (9) von der drehbaren Wickelwelle (14) mit der Bremstrommel (12b) in Reibkontakt stehen, um die Drehzahl ($\omega$) der drehbaren Wickelwelle (14) zu verlangsamen, wenn die Drehzahl ($\omega$) einen vorgegebenen Schwellenwert überschreitet.

## Revendications

1. Véhicule (1) avec une structure primaire de véhicule (1a) qui est pourvu d'une ouverture (1h), comprenant un agencement d'élément coulissant (4) avec un élément coulissant (5) qui est apte à obturer l'ouverture (1h) de la structure primaire de véhicule (1a) dans une position fermée et à coulisser le long d'au moins une partie de la structure primaire de véhicule (1a) lors d'un déplacement d'ouverture (6a) de l'élément coulissant (5) vers une position ouverte,
dans lequel l'ouverture (1h) de la structure primaire de véhicule (1a) est au moins partiellement ouverte,
dans lequel un agencement de contrôle de vitesse d'ouverture (6) est prévu pour contrôler une vitesse d'ouverture (v) de l'élément coulissant (5) lors du déplacement d'ouverture (6a), l'agencement de contrôle de vitesse d'ouverture (6) comprenant :

un dispositif de contrôle (8) avec un arbre d'enroulement pivotant (14) qui pivote lors du déplacement d'ouverture (6a) ;
une liaison mécanique de type lacet (9) qui couple mécaniquement l'élément coulissant (5) à la structure primaire de véhicule (1a) et qui est au moins partiellement enroulée autour de l'arbre d'enroulement pivotant (14) dans la position fermée de l'élément coulissant (5) ;
dans lequel la liaison mécanique de type lacet (9) est au moins partiellement désenroulée de l'arbre d'enroulement pivotant (14) lors du déplacement d'ouverture (6a) de l'élément coulissant (5), et dans lequel une vitesse de rotation ($\omega$) de l'arbre d'enroulement pivotant (14) lors du désenroulement au moins partiel de la liaison mécanique de type lacet (9) depuis l'arbre d'enroulement pivotant (14) est contrôlée par le dispositif de contrôle (8), de façon que la vitesse d'ouverture (v) de l'élément coulissant (5) lors du déplacement d'ouverture (6a) n'excède pas une vitesse maximale prédéterminée,
dans lequel le dispositif de contrôle (8) comprend un élément de réduction (12) de vitesse d'ouverture comprenant un frein centrifuge (12b-12g) qui s'enclenche sur l'arbre d'enroulement pivotant (14) et qui est configuré pour réduire la vitesse de rotation (ω) de l'arbre d'enroulement pivotant (14) lors du désenroulement au moins partiel de la liaison mécanique de type lacet (9) depuis l'arbre d'enroulement pivotant (14) ; **caractérisé en ce que** :

le frein centrifuge (12b-12g) comprend un tambour de frein (12b) et au moins deux patins de frein (12c, 12d) avec des plaquettes de frein (12e, 12f) associées qui entrent en contact par friction avec le tambour de frein (12b) afin de diminuer la vitesse de rotation (ω) de l'arbre d'enroulement pivotant (14) lors du déroulement au moins partiel de la liaison mécanique de type lacet (9) depuis l'arbre d'enroulement pivotant (14), si ladite vitesse de rotation (ω) excède une valeur de seuil prédéterminée.

2. Véhicule (1) selon la revendication 1, dans lequel le dispositif de contrôle (8) comprend un élément de montage (8a ; 15) qui permet de monter de façon rigide le dispositif de contrôle (8) sur l'élément coulissant (5), et dans lequel des moyens de raccordement (10) sont prévus afin de raccorder de façon rigide la liaison mécanique de type lacet (9) à la structure primaire de véhicule (1a).

3. Véhicule (1) selon la revendication 1, dans lequel le dispositif de contrôle (8) comprend un élément de montage (8a ; 15) qui permet de monter de façon rigide le dispositif de contrôle (8) sur la structure primaire de véhicule (1a), et dans lequel des moyens de raccordement (10) sont prévus afin de raccorder de façon rigide la liaison mécanique de type lacet (9) à l'élément coulissant (5).

4. Véhicule (1) selon la revendication 2 ou 3, dans lequel les moyens de raccordement (10) comprennent une agrafe de fixation (9a) qui est montée de façon rigide sur la liaison mécanique de type lacet (9), et une boucle (13) qui est configurée pour s'enclencher avec l'agrafe de fixation (9a), et dans lequel la boucle (13) est montée de façon rigide sur la structure primaire de véhicule (1a) ou sur l'élément coulissant (5).

5. Véhicule (1) selon la revendication 4, dans lequel la boucle (13) comprend un bouton de libération (13a) qui est manœuvrable afin de libérer l'agrafe de fixation (9a).

6. Véhicule (1) selon l'une quelconque des revendications précédentes, dans lequel l'élément de réduction de vitesse d'ouverture (12) est couplé à l'arbre d'enroulement pivotant (14).

7. Véhicule (1) selon l'une quelconque des revendications précédentes, dans lequel le dispositif de contrôle (8) comprend un élément de support de déplacement de fermeture (11) qui est apte à fonctionner de manière à appliquer un effort sur l'arbre d'enroulement pivotant (14) suivant une direction de rotation de l'arbre d'enroulement pivotant (14) et qui est associé à un enroulement de la liaison mécanique de type lacet (9) sur l'arbre d'enroulement pivotant (14).

8. Véhicule (1) selon la revendication 7, dans lequel l'élément de support de déplacement de fermeture (11) comprend un compartiment à ressort (11a) et un ressort de torsion (11b) qui est logé dans le compartiment à ressort (11a) et est couplé à l'arbre d'enroulement pivotant (14).

9. Véhicule (1) selon l'une quelconque des revendications précédentes, dans lequel l'arbre d'enroulement pivotant (14) comprend une fente longitudinale (14a) pour la fixation de la liaison mécanique de type lacet (9).

10. Véhicule (1) selon l'une quelconque des revendications précédentes, dans lequel la liaison mécanique de type lacet (9) est choisie parmi une courroie, un cordage, un cordon et un câble.

11. Véhicule (1) selon l'une quelconque des revendications précédentes, prenant la forme d'un aéronef, dans lequel la structure primaire de véhicule est un fuselage (1a) de l'aéronef (1), et dans lequel l'élément coulissant est une porte coulissante (5) ou un hublot coulissant.

12. Agencement de contrôle de vitesse d'ouverture (6) pour contrôler une vitesse d'ouverture d'un élément coulissant (5) d'un véhicule (1) associé lors d'un déplacement d'ouverture (6a) de l'élément coulissant (5), l'agencement de contrôle de vitesse d'ouverture (6) comprenant :

un dispositif de contrôle (8) avec un arbre d'enroulement pivotant (14) qui est configuré pour pivoter lors d'un déplacement d'ouverture (6a) de l'élément coulissant (5) ;
une liaison mécanique de type lacet (9) qui est configurée pour coupler mécaniquement l'élément coulissant (5) à une structure primaire de véhicule (1a) associée du véhicule (1) associé et qui est au moins partiellement enroulée autour de l'arbre d'enroulement pivotant (14) dans un mode de veille ;
dans lequel la liaison mécanique de type lacet (9) est apte à être au moins partiellement déroulée de l'arbre d'enroulement pivotant (14) lors d'un déplacement d'ouverture (6a) de l'élément coulissant (5), et dans lequel une vitesse de rotation de l'arbre d'enroulement pivotant (14) lors du déroulement au moins partiel de la liaison mécanique de type lacet (9) depuis l'arbre d'enroulement pivotant (14) est contrôlée par le dispositif de contrôle (8) de façon qu'une vitesse d'ouverture de l'élément coulissant (5) lors d'un déplacement d'ouverture (6a) n'excède pas une valeur de seuil prédéterminée, dans lequel le dispositif de contrôle (8) comprend un élément de réduction de la vitesse d'ouverture (12) qui comprend un frein centrifuge (12b-12g) qui s'enclenche sur l'arbre d'enroulement pivotant (14) et qui est configuré pour réduire la vitesse de rotation ($\omega$) de l'arbre d'enroulement pivotant (14), lors du déroulement au moins partiel de la liaison mécanique de type lacet (9) depuis l'arbre d'enroulement pivotant (14) ; **caractérisé en ce que** :

le frein centrifuge (12b-12g) comprend un tambour de frein (12b) et au moins deux patins de frein (12c, 12d) avec des plaquettes de frein (12e, 12f) associées qui sont en contact de friction avec le tambour de frein (12b) afin de ralentir la vitesse de rotation ($\omega$) de l'arbre d'enroulement pivotant (14) lors du déroulement au moins partiel de la liaison mécanique de type lacet (9) depuis l'arbre d'enroulement pivotant (14) si la vitesse de rotation ($\omega$) excède une valeur de seuil prédéterminée.

# Fig. 1

## Fig. 2

## Fig. 3

Fig. 4

Fig. 5

Fig. 6

# Fig. 7

14
14b
14a
14c

# Fig. 8

15
15g
15b
15a
15f
15e
15f
15f
15d
15g
15c

# Fig. 9

14d    14d
14
14b
14a
14c
14e    14e

## Fig. 10A

## Fig. 10B

# Fig. 11

# Fig. 12

**Fig. 13A**

**Fig. 13B**

**Fig. 14**

**Fig. 15**

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009250024 A
- JP 2004009897 A

- US 20190119966 A1